# DEMANDE DE BREVET EUROPEEN

(11) **EP 0 881 474 A1**
(43) Date de publication de la demande: **02.12.1998**
(21) Numéro de dépôt: 98480034.2
(22) Date de dépôt: 26.05.1998
(51) Int. Cl.: G01F 11/26

(54) **Flacon doseur de sécurité**

(30) Priorité: 26.05.1997 FR 9706353
(71) Demandeur: Tournaire, S.A., 06338 Grasse Cedex (FR)
(72) Inventeur: Bottero, Jean-Claude, 06130 Grasse (FR)
(74) Mandataire: Bonneau, Gérard

(57) **Abrégé**

Flacon doseur de sécurité comprenant un récipient (10) muni d'un goulot (16) et contenant un liquide dont il faut verser une quantité déterminée, un doseur (12) fixé à l'extérieur du goulot et adapté pour doser la quantité déterminée et un bouchon (14) pour boucher le flacon doseur, le goulot (16) étant muni d'un clapet (20) à deux positions constitué d'un téton (22) et d'une base élastique (24) comportant des évidements (25) pour le passage du liquide provenant dudit récipient (20). Le clapet est maintenu en position basse par la pression exercée sur le téton par le bouchon lorsque ce dernier est installé sur le flacon permettant ainsi au récipient de communiquer avec le doseur pour y doser la quantité déterminée de liquide, et maintenu en position haute dans un siège (26) grâce à l'élasticité de la base (24) lorsque le bouchon est retiré en empêchant doseur, le liquide contenu dans le doseur pouvant être versé dans un autre récipient.

## Description

### Domaine technique

La présente invention se rapporte aux récipients contenant des liquides dangereux ou à manipuler avec précaution et concerne en particulier un flacon doseur permettant de doser une quantité voulue de liquide sans contact du liquide avec les mains de l'utilisateur.

### Etat de la technique

Lorsqu'il est nécessaire de verser une quantité déterminée de liquide contenue dans un récipient, il est d'usage de se servir d'un doseur séparé fourni en même temps que le récipient contenant le liquide, qui se présente généralement sous la forme d'une éprouvette graduée en unités de volume à doser. Comme chacun sait, cette opération est quasiment impossible à réaliser sans recevoir des gouttes de liquide sur les doigts avec le danger que cela présente lorsque le liquide en question est dangereux pour la peau.

Il existe dans le commerce des récipients dont le goulot est muni d'un doseur comportant un clapet permettant le passage du liquide dans le doseur après ouverture du clapet. De tels récipients sont décrits dans les documents DE-296.03551, DE-295.14691, US 3.091.374, US 5.078.305 et EP 0.254.138.

Malheureusement, les récipients décrits dans ces documents présentent des inconvénients majeurs. Ainsi, aucun d'eux ne permet de verser une quantité voulue de liquide contenu dans le récipient, mais seulement une quantité prédéterminée de liquide correspondant à la capacité du doseur.

Le document US 3.091.374 décrit un récipient dans lequel le liquide contenu dans le doseur est versé à travers le bouchon. Il peut donc y avoir des traces de liquide à la surface du bouchon et donc le risque de contact avec les doigts lors de la manipulation du récipient ou du bouchon.

Dans le document DE-295.14691, il est nécessaire que l'utilisateur exerce une pression sur le haut du bouchon pour provoquer l'ouverture du clapet, ce qui n'est pas très pratique.

L'inconvénient ci-dessus n'existe pas dans les documents DE-296.03551, US 5.078.305 et EP 0.254.138 dans lesquels c'est la fermeture du récipient par un bouchon qui provoque l'ouverture d'un clapet permettant le passage du liquide du récipient au doseur. Cependant, dans ces trois documents, le clapet se trouve en partie basse du doseur ce qui empêche pratiquement de reverser dans le récipient, tout ou partie du liquide se trouvant dans le doseur au cas où l'utilisateur décide de ne pas effectuer le versement pour quelque raison que ce soit.

### Exposé de l'invention

C'est pourquoi le but de l'invention est de remédier à ces inconvénients en fournissant un flacon doseur dont le dosage d'une quantité déterminée de liquide peut se faire avec précision sans courir le risque de mettre du liquide en contact avec la peau de l'utilisateur.

Un autre but de l'invention est un flacon doseur comportant un doseur gradué permettant un dosage aisé d'une quantité déterminée de liquide.

Encore un autre but de l'invention est un flacon doseur comportant un doseur pour le dosage d'une quantité déterminée de liquide et dont le contenu peut être reversé en tout ou partie dans le flacon.

L'objet de l'invention est donc un flacon doseur de sécurité du type comprenant un récipient muni d'un goulot et contenant un liquide dont il faut verser une quantité déterminée, un doseur sous forme d'un récipient de dosage fixé à l'extérieur du goulot et adapté pour doser la quantité déterminée de liquide et un moyen de fermeture pour boucher le flacon doseur. Le goulot est muni d'un clapet à deux positions commandées par la manoeuvre du moyen de fermeture, un tel clapet étant constitué d'un téton et d'une base élastique comportant des évidements pour le passage du liquide provenant du récipient. Le clapet est maintenu en position basse par la pression exercée sur le téton par le moyen de fermeture lorsque ce dernier est installé sur le flacon permettant ainsi au récipient de communiquer avec le doseur pour y doser la quantité déterminée de liquide comprise entre 0 et la capacité maximale du doseur, et est maintenu en position haute dans un siège grâce à l'élasticité de la base lorsque le moyen de fermeture est retiré en empêchant ainsi tout passage de liquide entre le récipient et le doseur, le liquide contenu dans le doseur pouvant ainsi être versé dans un autre récipient.

### Description brève des figures

Les buts, objets et caractéristiques de l'invention apparaîtrons plus clairement à la lecture de la description qui suit en référence aux dessins dans lesquels :
la figure 1 est vue en élévation d'un flacon doseur selon un mode de réalisation préféré de l'invention,
la figure 2 est une vue en coupe du flacon doseur illustré sur la figure 1 avec le bouchon en place,
la figure 3 est une vue en coupe du flacon doseur illustré sur la figure 1 avec le bouchon retiré,
la figure 4 est une vue en coupe de la partie du goulot comportant le clapet lorsque le bouchon est en place,
la figure 5 est une vue en coupe de la partie du goulot comportant le clapet lorsque le bouchon a été retiré, et
les figures 6A à 6E représentent le flacon doseur occupant les différentes positions permettant le remplissage partiel du doseur par une quantité voulue de liquide et son versement à l'extérieur.

### Description détaillée de l'invention

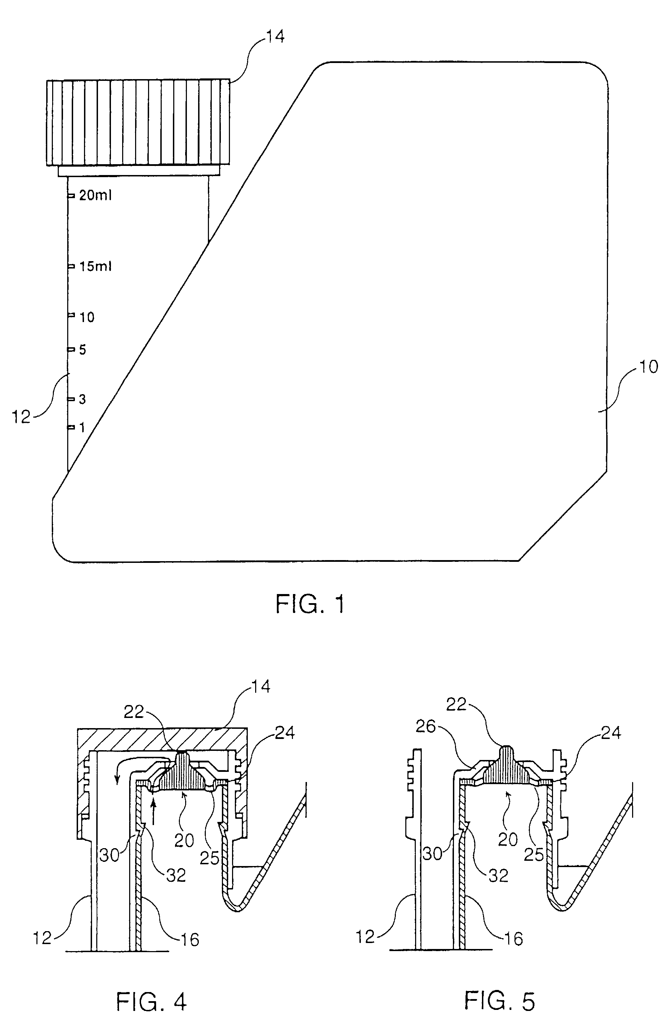

Le flacon qui fait l'objet de l'invention se présente selon un mode de réalisation préféré comme illustré sur la figure 1. Un récipient 10 pouvant contenir un liquide dangereux ou dont il faut éviter le contact avec la peau est associé à un doseur 12 installé sur le goulot du récipient 10 comme on le verra par la suite, l'ensemble étant bouché par un bouchon 14.

Le récipient 10 est généralement opaque mais peut être transparent ou translucide, alors que le doseur 12 est transparent ou légèrement teinté de manière à ce que l'utilisateur puisse lire la quantité dosée de liquide exprimée en ml sur la figure 1, quantité qui peut-être comprise entre 0 et la capacité maximale du doseur.

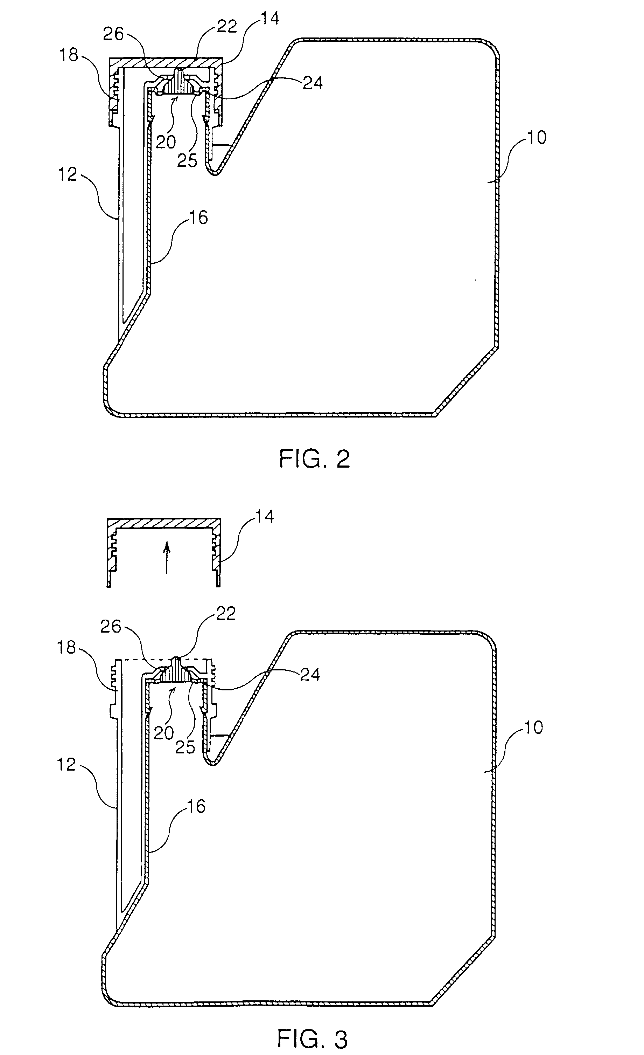

Le flacon doseur illustré sur la figure 1 est vu en coupe sur les figures 2 et 3. Comme on le voit, le doseur 12 enserre le goulot 16 du récipient 10 et présente un filetage mâle 18 dans sa partie supérieure pour y visser le bouchon 14.

Le haut du goulot 16 est muni d'un clapet 20 de forme circulaire formé d'un téton 22 et d'une base 24 comportant des évidements 25. Le clapet 20 est bloqué en position haute dans un siège 26. Lorsque le bouchon 14 est vissé sur le goulot 16, il exerce une pression sur le téton 22 qui descend vers le bas et se sépare du siège 26. Lorsque le bouchon est dévissé comme illustré sur la figure 3, le clapet a tendance à reprendre sa position haute où il est bloqué dans son siège 26 grâce à l'effet ressort exercé par la base élastique 24 du clapet.

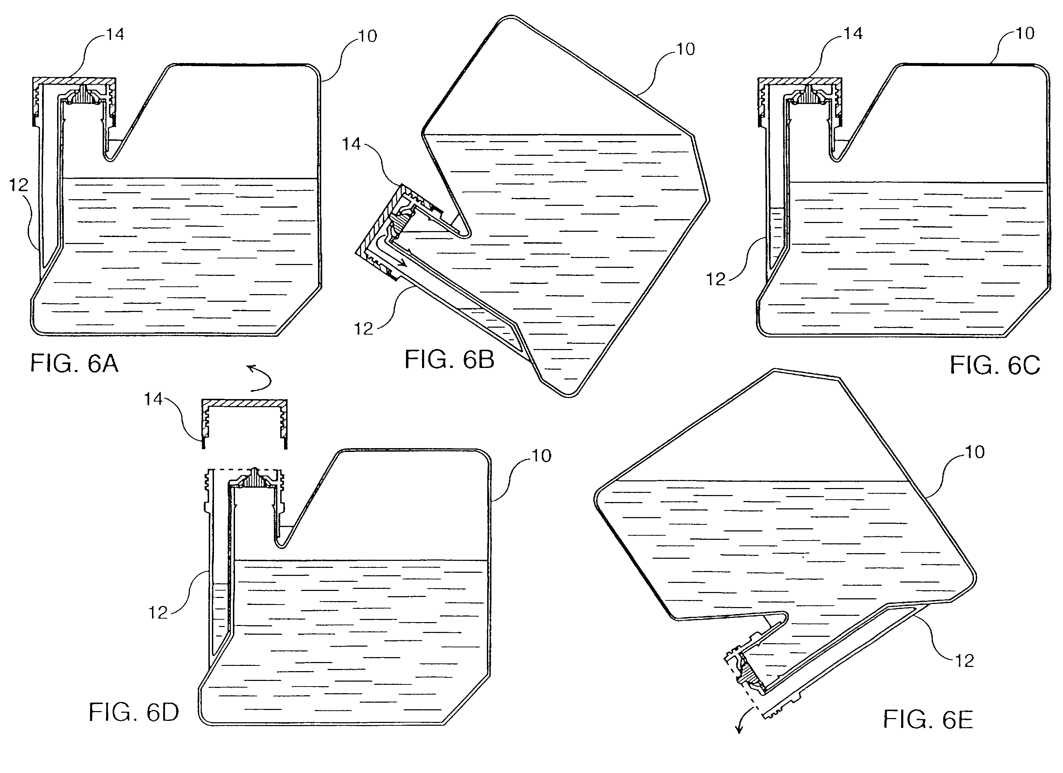

Le fonctionnement du clapet est illustré de façon détaillée sur les figures 4 et 5. Sur la figure 4, le bouchon 14 est vissé et le téton 22 est donc repoussé vers le bas. Le clapet 20 a donc quitté son siège 26, ce qui met en communication l'intérieur du goulot 16 avec le doseur 12 par les évidements 25 de la base du clapet et le siège 26 comme le montrent les flèches de la figure 4. Ainsi, il est possible de faire passer du liquide se trouvant dans le récipient directement dans le doseur alors que l'ensemble est fermé par le bouchon 14 qui empêche ainsi de se verser du liquide sur les mains.

Ensuite, lorsque le bouchon est retiré comme illustré sur la figure 5, le téton 22 remonte sous l'effet ressort exercé par la base élastique 24. Le clapet se positionne alors dans son siège 26 et ferme donc l'ouverture du goulot 16 empêchant ainsi toute sortie de liquide du récipient.

Le mode opératoire de versement de liquide à partir du récipient est illustré sur les figures 6A à 6E. Sur la figure 6A, le flacon est en position verticale, fermé par le bouchon 14. Dans cette position, comme on l'a vu en référence aux figures précédentes, le goulot est en communication avec le doseur 12. L'utilisateur peut donc pencher le flacon pour que le liquide passe du goulot au doseur 12 sans pouvoir sortir à l'extérieur du fait que le bouchon 14 est installé. Cette manoeuvre est illustrée par la figure 6B.

L'utilisateur peut alors remettre le flacon en position verticale comme illustré sur la figure 6C. Ainsi, il peut visualiser la dose de liquide se trouvant dans le doseur 12. Il a alors la possibilité de verser un peu plus de liquide dans le doseur s'il n'y en a pas suffisamment en procédant à nouveau à l'opération de versement illustrée sur la figure 6B. Par contre, s'il y a trop de liquide dans le doseur 12, l'utilisateur peut en faire passer du doseur au récipient en penchant le flacon vers la droite. On doit noter que si, pour quelque raison que ce soit, l'utilisateur change d'avis et décide de ne pas effectuer le versement de liquide, il peut aisément reverser tout le contenu du doseur 12 dans le récipient 10 en penchant le flacon à droite au delà de l'horizontale. Cette opération est facilement réalisable du fait que le clapet se trouve situé dans la partie haute du goulot et du doseur.

Puis, sur la figure 6D, le bouchon 14 est retiré du flacon et le liquide se trouvant dans le doseur 12 peut alors être versé à l'extérieur en penchant le flacon vers la gauche comme illustré sur la figure 6E.

Le flacon doseur selon l'invention qui vient d'être décrit est simple à réaliser par le procédé d'injection. Le doseur 12 fabriqué en une pièce séparée du récipient, et dans lequel on a placé le clapet 20 est installé sur le goulot 16 du récipient 10. Le doseur dispose sur sa paroi intérieure d'un anneau d'enclipsage 30 qui vient lors du montage du doseur, s'enclipser dans un évidement correspondant 32. Après enclipsage, la base 24 du clapet 20 se trouve donc prisonnière entre le haut du goulot 16 et le siège 26. L'étanchéité entre le goulot 16 et le doseur 12 est ainsi assurée d'une part par l'anneau d'enclipsage 30 et par la base 24 du clapet.

On doit noter que le bouchon 14 peut être tout type de bouchon tel qu'un double bouchon de sécurité devant être pressé pour pouvoir actionner le système d'ouverture. Il peut aussi être muni d'une bague d'inviolabilité qui se détache du bouchon lorsqu'on ouvre le flacon pour la première fois. Le bouchon pourrait également être remplacé par tout autre moyen de fermeture tel qu'une targette, pouvant prendre deux positions, une première position assurant la communication entre le goulot et le doseur en même temps que la fermeture du flacon, et une seconde position fermant la communication entre le récipient et le doseur en même temps qu'elle assure l'ouverture du doseur vers l'extérieur pour en verser son contenu.

On voit donc que le flacon doseur selon l'invention présente l'avantage de rester fermé pendant le dosage et d'éviter ainsi le contact possible d'un liquide dangereux contenu dans le flacon avec la peau de l'utilisateur. Il n'y a plus besoin de rinçage du doseur après utilisation. En outre, il est toujours possible de faire retourner du liquide dans le récipient au cas où une quantité trop importante a été placée dans le doseur, et toujours sans ouvrir le flacon.

## Revendications

1. Flacon doseur de sécurité comprenant un récipient (10) muni d'un goulot (16) et contenant un liquide dont il faut verser une quantité déterminée, un doseur (12) relié audit goulot et adapté pour doser ladite quantité déterminée et un moyen de fermeture (14) pour boucher le flacon doseur, ledit goulot étant muni d'un clapet (20) à deux positions commandées par la manoeuvre dudit moyen de fermeture, une position ouverte lorsque ledit moyen de fermeture a été installé pour fermer le flacon doseur et une position fermée lorsque ledit moyen de fermeture a été enlevé de sorte que le contenu dudit doseur puisse être versé dans un autre récipient ;
ledit flacon doseur étant caractérisé en ce que ledit doseur (12) est un récipient de dosage fixé à l'extérieur dudit goulot et ledit clapet (20) est constitué d'un téton (22) et d'une base élastique (24) comportant des évidements (25) pour le passage du liquide provenant dudit récipient (20), ledit clapet étant maintenu en position basse par la pression exercée sur ledit téton par ledit moyen de fermeture lorsque ce dernier est installé sur ledit flacon permettant ainsi audit récipient de communiquer avec ledit doseur pour y doser la quantité déterminée de liquide comprise entre 0 et la capacité maximale dudit doseur, et ledit clapet étant maintenu en position haute dans un siège (26) grâce à l'élasticité de ladite base lorsque ledit moyen de fermeture (14) est retiré en empêchant ainsi tout passage de liquide entre ledit récipient et ledit doseur, le liquide contenu dans ledit doseur pouvant être versé dans un autre récipient.

2. Flacon doseur selon la revendication 1, dans lequel ledit doseur (12) est fixé sur ledit goulot (16) par un moyen d'enclipsage (30, 32).

3. Flacon doseur selon la revendication 2, dans lequel ledit doseur (12) est cylindrique et ledit moyen de fermeture (14) est un bouchon vissé sur ledit doseur.

4. Flacon doseur selon la revendication 1,2 ou 3, dans lequel ledit siège (26) est une ouverture située dans un élément solidaire dudit doseur (12) à la partie supérieure dudit goulot (16).

5. Le flacon doseur selon la revendication 4, dans lequel ledit clapet est coincé entre la partie supérieure dudit goulot (16) et ledit élément où se trouve ledit siège (26), et constitue ainsi un moyen d'étanchéité pour ledit récipient (20).
